# FASCICULE DE BREVET EUROPEEN

(11) **EP 2 561 926 B1**
(45) Date de publication et mention de la délivrance du brevet: **30.04.2014**
(21) Numéro de dépôt: 12290266.1
(22) Date de dépôt: 02.08.2012
(51) Int. Cl.: B01J 8/06, C01B 3/34

(54) **Réacteur échangeur pour la production d'hydrogène avec faisceau de generation vapeur intégré**
Wechselreaktor für die Erzeugung von Wasserstoff mit integriertem Dampferzeugungsstrahl
Heat-exchange reactor for hydrogen production with integrated steam-generation bundle

(30) Priorité: 26.08.2011 FR 1102602
(43) Date de publication de la demande: 27.02.2013
(73) Titulaire: IFP Energies Nouvelles, 92852 Rueil Malmaison Cedex (FR)
(72) Inventeur: Boyer, Christophe, 69390 Charly (FR); Giroudiere, Fabrice, 69530 Orlienas (FR)

(56) Documents cités:
- WO-A1-01/56690
- FR-A1- 2 852 358
- FR-A1- 2 918 904

## Description

### DOMAINE DE L'INVENTION

La présente invention se situe dans le domaine des réacteurs échangeurs destinés à la mise en oeuvre de réactions endothermiques, telle que le vaporeformage de coupes pétrolières ou d'alcools en vue de la production de gaz de synthèse.

Ce type de réacteur est connu de l'art antérieur et on peut en trouver une description dans les brevets US4919844, US4690690, WO2003031050, WO03/035242.

Le principe d'un tel réacteur échangeur consiste schématiquement à faire circuler des fumées chaudes, pouvant atteindre en entrée de réacteur 1200°C, autour d'un ensemble de tubes à l'intérieur desquels se déroule une réaction endothermique ou un ensemble de réactions globalement endothermique. L'efficacité thermique d'un tel réacteur échangeur est essentiellement déterminée par la température de sortie des fumées.

La présente invention a pour but d'améliorer l'efficacité thermique d'un tel réacteur échangeur en abaissant la température de sortie des fumées, ceci par intégration à l'intérieur même dudit réacteur échangeur d'un faisceau de génération de vapeur d'eau convenablement disposé. Dans la suite du texte on prendra l'exemple de la réaction de vaporeformage du gaz naturel, comme représentative des réactions endothermiques concernées par le réacteur échangeur objet de la présente invention. Mais plus généralement, la présente invention concerne toutes les réactions endothermiques pour lesquelles l'apport de calories peut se faire par des fumées chaudes.

La réaction de vaporeformage a lieu a des températures très élevées, typiquement 900°C et sous pression, typiquement de 20 à 30 bars. Il en résulte que la réaction est mise en oeuvre dans un ensemble de tubes, seule solution économiquement viable en raison de la tenue mécanique des matériaux. Ces réacteurs catalytiques sont donc constitués d'une multitudes de tubes, typiquement de l'ordre de 200 à 400 tubes, pour des unités produisant 100 000 Nm³/h d'hydrogène.

Ces tubes sont chauffés par des fumées chaudes générées en amont du réacteur échangeur, par exemple dans une chambre de combustion externe, ou encore par une turbine génératrice de gaz chaud suivie d'une chambre de combustion externe, comme cela est le cas dans le réacteur échangeur décrit dans le brevet FR 2 852 358.

Les tubes peuvent être de type baïonnettes, de façon à avoir les entrées de réactifs et les sorties de produit à la même extrémité. Les tubes baïonnettes sont suspendus à la voûte supérieure du réacteur échangeur ce qui facilite la gestion des dilatations thermiques.

Un exemple de réacteur-échangeur de grande taille est le réacteur "HyGenSys" décrit dans le brevet FR 2 918 904. Ce réacteur échangeur comprend un grand nombre (supérieur à 50) de tubes enfermés dans une calandre de grand diamètre (plusieurs mètres) et avec des différences de pression élevées entre le côté procédé (ou côté tube) et le côté fumées (ou côté calandre). Une solution également connue pour améliorer les coefficients d'échange entre les fumées et les tubes baïonnettes à l'intérieur desquels se déroulent les réactions endothermiques est d'avoir des vitesses de circulation des fumées élevées, notamment en les faisant passer autour des tubes baïonnettes dans des tubes que l'on appellera des tubes cheminées ou plus simplement cheminée, chaque cheminée entourant un tube baïonnette.

Selon l'art antérieur (brevet FR 2 918 904) ces cheminées sont fixées et supportées par une plaque horizontale fixée aux parois de la calandre du réacteur échangeur. Cette dernière peut être classiquement renforcée par le dessous ou par le dessus à l'aide de poutres afin de minimiser son épaisseur.

Les fumées chaudes transfert une partie de leur énergie aux tubes baïonnettes, mais sont encore très chaudes en sortie du réacteur-échangeur (entre 550°C et 700°C, et typiquement entre 600°C et 650°C). L'efficacité thermique n'est donc pas très élevée, et un des objets de la présente invention est d'améliorer l'efficacité thermique d'un tel réacteur échangeur par abaissement de la température de sortie des fumées.

### EXAMEN DE L'ART ANTERIEUR

Lors de l'utilisation d'un réacteur-échangeur avec des fumées sous pression (typiquement entre 2 et 5 bar relatifs), il devient très difficile de réaliser les connections de sorties des fumées lorsque ces dernières sont à des températures supérieures à 550°C. Selon l'art antérieur, il faut isoler thermiquement l'intérieur de la tubulure de sortie de façon à ce que la bride soit à une température suffisamment faible, mais ce mode de réalisation impose un diamètre de tubulure encore plus important pouvant conduire à des problèmes mécaniques sur la virole du réacteur-échangeur qui elle même doit rester à une température relativement basse (typiquement inférieure à 300°C) pour rester économiquement viable.

Par ailleurs, dans la solution de l'art antérieur, les fumées sortant par le haut du réacteur-échangeur, doivent être collectées et redescendues au niveau du sol pour alimenter les équipements aval généralement posés sur le sol (chambre de combustion secondaire ou expandeur ou générateur de vapeur). Or cette ligne chaude de redescente des fumées doit également être isolée intérieurement ce qui la rend volumineuse et coûteuse. Par ailleurs, elle est source de déperditions thermiques qui pénalisent l'efficacité globale du système.

La présente invention permet d'éliminer cette ligne de redescente des fumées, tout en améliorant l'efficacité thermique du réacteur échangeur.

### DESCRIPTION SOMMAIRE DES FIGURES

La figure 1 représente une vue schématique du réacteur échangeur selon l'invention dans lequel on a mis en évidence le circuit de génération vapeur comprenant la nourrice d'alimentation (9), le faisceau de tubes de génération vapeur (5), le collecteur supérieur (7) et la ballon séparateur (6).
La figure 2 est une vue en coupe du réacteur échangeur permettant de distinguer l'espace central dédié aux tubes baïonnettes du procédé, et l'espace périphérique contenant les tubes de génération vapeur.

### DESCRIPTION SOMMAIRE DE L'INVENTION

La présente invention peut se définir comme un réacteur échangeur destiné à la mise en oeuvre de réactions endothermiques comportant une pluralité de tubes baïonnettes suspendus à la voute supérieure (2) dudit réacteur et s'étendant jusqu'au niveau du fond inférieur (3), les tubes baïonnettes (4) étant utilisés pour effectuer la ou les réactions chimiques endothermiques et étant enfermés dans une calandre (1) comportant une tubulure d'entrée (E) pour les fumées chaudes apportant les calories aux tubes baïonnettes (4) et au moins une tubulure de sortie (S) pour l'évacuation des fumées froides après échange thermique, le réacteur échangeur comportant en outre un faisceau de génération vapeur constitué d'une pluralité de tubes de génération vapeur sensiblement verticaux (5) également suspendus à la voute supérieure (2) du réacteur échangeur et s'étendant jusqu'au niveau du fond inférieur (3), et contenus dans un espace périphérique (8) compris entre un baffle interne (Bi) sensiblement parallèle à la paroi verticale de la virole (1) et la dite paroi verticale (1). Le dit baffle interne (Bi) posséde au moins une ouverture (Oi) permettant le transfert des fumées (10) depuis le coeur du réacteur vers l'espace périphérique (8). Les tubes verticaux (5) servant à la génération vapeur sont alimentés en eau par une nourrice inférieure (9) située dans la partie inférieure de l'espace périphérique (8), et le mélange liquide vapeur issu des tubes verticaux (5) est collecté dans un collecteur supérieur (7) situé au dessus de la voute supérieure (2) du réacteur échangeur, sensiblement au même niveau que le ballon séparateur (6).

Selon une première variante du réacteur échangeur selon l'invention, chaque tube de génération vapeur (5) est entouré d'un tube permettant de canaliser les fumées autour du tube de génération vapeur (5).

Selon une seconde variante du réacteur échangeur selon l'invention, un système de chicanes fixées aux parois de l'espace périphérique (8) permet aux fumées (10) de circuler de manière sensiblement perpendiculaire aux tubes verticaux (5).

De manière préférée l'ouverture (Oi) permettant le passage des fumées depuis le coeur du réacteur dans l'espace périphérique (8) est située en partie supérieure du baffle interne Bi. Dans le réacteur échangeur selon la présente invention, le volume périphérique (8) correctement dimensionné peut représenter moins de 10%, et préférentiellement moins de 5% du volume total du réacteur échangeur.

Le réacteur échangeur selon l'invention peut en particulier être utilisé pour la mise en oeuvre du procédé de vaporeformage d'une coupe pétrolière ou de gaz naturel ou d'alcool.

Dans ce cas la vitesse des fumées dans l'espace périphérique (8) est généralement comprise entre 20 m/s et 80 m/s, et préférentiellement comprise entre 30 m/s et 60 m/s.

Toujours dans le cadre de l'utilisation du réacteur échangeur selon la présente invention dans un procédé de vaporeformage d'une coupe pétrolière ou de gaz naturel ou d'alcool, les fumées pénètrent dans le réacteur échangeur à une température voisine de 1200°C, et quittent ledit réacteur échangeur à une température préférentiellement inférieure à 400°C.

### DESCRIPTION DETAILLEE DE L'INVENTION

La présente invention peut se définir comme un réacteur échangeur à efficacité énergétique améliorée par la mise en place d'un faisceau de génération vapeur entièrement intégré audit réacteur, c'est à dire placé dans un espace périphérique par rapport au coeur du réacteur occupé par le faisceau de tubes baïonnettes, et permettant de mieux épuiser les fumées.

La solution, objet de l'invention, consiste à refroidir les fumées après leur premier échange avec les tubes baïonnettes (4) permettant la réalisation des réactions chimiques du procédé, en générant de la vapeur avant leur sortie du réacteur-échangeur (1) dans un espace (8) situé en périphérie du réacteur échangeur.

Pour cela des tubes de génération vapeur verticaux (5) sont installés en périphérie du réacteur-échangeur (1) à l'intérieur de l'espace périphérique (8) délimité d'une part par un baffle interne (Bi) sensiblement vertical s'étendant depuis le fond inférieur (3) jusqu'à la voûte supérieure (2), et d'autre part par la paroi verticale de la virole (1) du réacteur échangeur.

Ces tubes de génération vapeur verticaux (5) sont suspendus depuis la voute supérieure (2) du réacteur et sont libres de se dilater vers le bas.

Les tubes verticaux (5) sont alimentés en eau liquide depuis un ballon de vapeur (6) positionné préférentiellement à une hauteur supérieure à celle du niveau supérieur du réacteur échangeur (1) par une nourrice annulaire inférieure (9). Cette nourrice inférieure (9) est alimentée en eau à partir du ballon séparateur (6) au moyen d'une conduite d'eau sensiblement verticale (11), elle même située à l'intérieur de l'espace périphérique (8).

Dans les tubes de génération vapeur (5), l'eau se vaporise partiellement, typiquement entre 5% et 100% de vaporisation, par échange thermique avec les fumées (10) qui descendent dans l'espace périphérique (8) du réacteur échangeur (1) depuis l'ouverture (Oi) jusqu'à la tubulure de sortie (S).

Les tubes de génération vapeur (5) sont connectés en partie haute à un collecteur supérieur (7) extérieur au réacteur permettant de collecter la vapeur ou le mélange eau/vapeur avant d'alimenter le ballon séparateur (6).

Les fumées (10) sont ainsi refroidies en-dessous de 400°C, préférentiellement entre 300°C et 350°C, ce qui permet de les sortir du réacteur-échangeur (I) par au moins une bride (S) de métallurgie standard, de type inox 316 par exemple. Cette bride (S) (ou ces brides (S)) est préférentiellement placée en partie inférieure du réacteur échangeur.

Du réfractaire (R) est disposé le long du fond inférieur (3), le long de la paroi du baffle Bi, du côté orienté vers les tubes du procédé, et le long de la paroi verticale de la virole (1).

L'espace périphérique (8) ainsi formé pour le circuit des fumées (10) permet de minimiser les pertes thermiques. Par ailleurs, la température plus faible des fumées au voisinage de la virole (1) permet de minimiser l'épaisseur de réfractaire (R) disposé le long de la paroi verticale de la virole (1).

Les tubes de génération de vapeur (5) peuvent être munis d'ailettes extérieures afin d'augmenter le coefficient d'échange avec les fumées.

La nourrice annulaire inférieure (9) est alimentée par une ligne (11) d'eau liquide au point de bulle en provenance du ballon de vapeur (6), soit par thermosiphon (différence de densité entre l'eau liquide et l'eau partiellement vaporisée) soit par une pompe, notamment si le ballon vapeur n'est pas positionné suffisamment haut.

La ligne inférieure (14) relie la phase liquide du ballon séparateur (6) au collecteur supérieur (7).

La ligne supérieure (13) relie le collecteur supérieur (7) à la phase vapeur du ballon séparateur (6).

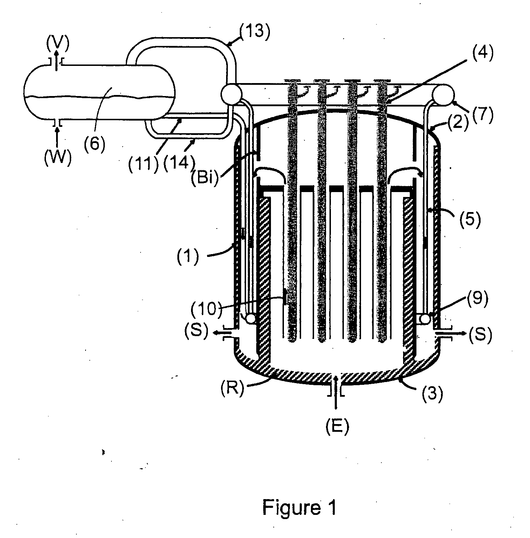

Les fumées issues de la tubulure d'entrée (E) s'étendent depuis le coeur du réacteur jusqu'au baffle interne (Bi), et pénètrent dans l'espace périphérique (8) contenant les tubes de génération vapeur (5) par au moins une ouverture (Oi) ménagée dans le baffle interne (Bi), et quittent le dit espace périphérique (8) par la tubulure de sortie (S) située en partie inférieure de la virole (1). La ou les ouvertures (Oi) sont préférentiellement placée(s) en partie supérieure du baffle Bi comme indiqué sur la figure 1.

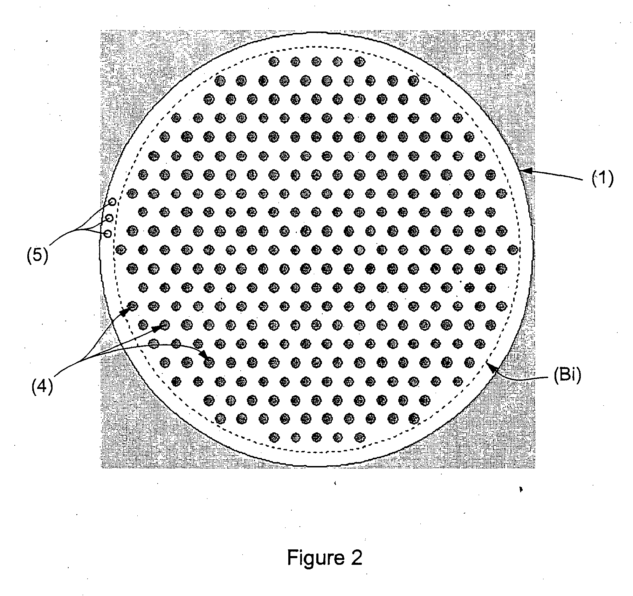

Afin de forcer l'échange entre les fumées (10) et les tubes de génération de vapeur (5), des chicanes (non représentées sur les figures 1 et 2) peuvent être installées de manière à ce que les fumées (10) soient obligées de croiser les tubes (5) plutôt que de les longer.

Selon un autre mode de réalisation, les tubes de génération de la vapeur (5) peuvent être eux-mêmes disposés dans des tubes (non représentés sur les figures 1 et 2) qui canalisent les fumées (10) pour accélérer lesdites fumées et intensifier l'échange thermique avec les tubes de génération vapeur (5).

Le faisceau d'échange (5) peut également être utilisé pour surchauffer de la vapeur.

### EXEMPLE SELON L'INVENTION

Un exemple de mise en oeuvre de l'invention a été effectué pour une unité de production de 100 000 Nm3/h d'hydrogène pur. Pour cette capacité, le réacteur HyGenSys est composé de 301 tube catalytiques de 15 m de hauteur.

On suppose un pas entre tubes de 450 mm. On suppose que l'on génère une partie de la vapeur nécessaire au procédé par un échangeur interne au réacteur raccordé à un ballon de vapeur et fonctionnant en thermosiphon.

La quantité de chaleur nécessaire à la vaporisation est de 30 MW. Le procédé produit un débit de 400 T/h de fumées à une pression de 3 bar abs en entrée de réacteur.

La température des fumées en sortie de la section d'échange avec les tubes catalytiques est de 600°C.

La température des fumées en sortie de la section de vaporisation est de 375°C.

Les tubes de vaporisation sont de diamètre externe 50 mm et de diamètre interne 44 mm.

Ces tubes de vaporisation sont situés dans une zone annulaire de 120 mm de large située en périphérie du réacteur. La vitesse des fumées entre les tubes est de 92 m/s.

Le coefficient d'échange global est de 285 W/m²/°C et l'échange nécessite de disposer 210 tubes de la même hauteur que les tubes catalytiques.

Le pas entre tubes est ainsi de 134 mm.

Le diamètre interne du réacteur, hors réfractaire, est de 9 m, alors qu'il serait de 8,76 m sans la section de vaporisation. Ainsi, le supplément de volume engendré par la présence du faisceau de génération vapeur intégré est de 5,2 %, et le gain en efficacité énergétique directement lié à la température de sortie des fumées est de 32 %.

## Revendications

1. Réacteur échangeur destiné à la mise en oeuvre de réactions endothermiques comportant une pluralité de tubes baïonnettes (4) suspendus à la voute supérieure (2) dudit réacteur et s'étendant jusqu'au niveau du fond inférieur (3), les tubes baïonnettes (4) étant utilisés pour effectuer la ou les réactions chimiques endothermiques et étant enfermés dans une virole (1) comportant une tubulure d'entrée (E) pour les fumées chaudes apportant les calories aux tubes baïonnettes (4), et au moins une tubulure de sortie (S) pour l'évacuation des fumées froides après échange thermique, le réacteur échangeur comportant un faisceau de génération vapeur constitué d'une pluralité de tubes verticaux (5) également suspendus à la voute supérieure (2) du réacteur échangeur, et contenus dans un espace périphérique (8) compris entre un baffle interne (Bi) sensiblement parallèle à la paroi verticale de la virole (1) et la dite paroi verticale (1), le dit baffle interne (Bi) possédant au moins une ouverture (Oi) permettant le transfert des fumées (10) depuis le coeur du réacteur vers l'espace périphérique (8), les tubes verticaux (5) servant à la génération vapeur étant alimentés en eau par une nourrice inférieure (9) située dans la partie inférieure de l'espace périphérique (8), et le mélange liquide vapeur issu des tubes verticaux (5) étant collecté dans un collecteur supérieur (7) situé au dessus de la voute supérieure (2) du réacteur échangeur, la ligne inférieure (14) reliant la phase liquide du ballon séparateur (6) au collecteur supérieur (7) et la ligne supérieure (13) reliant le collecteur supérieur (7) à la phase vapeur du ballon séparateur (6).

2. Réacteur échangeur selon la revendication 1 dans lequel chaque tube de génération vapeur (5) est entouré d'un tube de paroi sensiblement vertical et coaxial au tube de génération concerné permettant de canaliser les fumées (10) autour du tube de génération vapeur (5).

3. Réacteur échangeur selon la revendication 1, dans lequel un système de chicanes fixées aux parois de l'espace périphérique (8) permet aux fumées (10) de circuler de manière sensiblement perpendiculaire aux tubes verticaux (5).

4. Réacteur échangeur selon la revendication 1, dans lequel le volume périphérique (8) représente moins de 10%, et préférentiellement moins de 5% du volume total du réacteur échangeur.

5. Réacteur échangeur selon la revendication 1, dans lequel l'ouverture (Oi) permettant le passage des fumées depuis le coeur du réacteur dans l'espace périphérique (8) est située en partie supérieure du baffle interne Bi.

6. Procédé de vaporeformage d'une coupe pétrolière ou de gaz naturel ou d'alcool faisant appel au réacteur échangeur selon la revendication 1 dans lequel la vitesse des fumées dans l'espace périphérique (8) est comprise entre 20 m/s et 80 m/s et préférentiellement comprise entre 30 m/s et 60 m/s.

7. Procédé de vaporeformage d'une coupe pétrolière ou de gaz naturel ou d'alcool faisant appel au réacteur échangeur selon la revendication 1 dans lequel les fumées pénètrent dans le réacteur échangeur à une température voisine de 1200°C, et quittent ledit réacteur échangeur à une température inférieure à 400°C.

## Patentansprüche

1. Austauschreaktor zur Durchführung von endothermen Reaktionen, der mehrere Bajonettrohre (4) aufweist, die an der oberen Kuppel (2) des Reaktors hängend angebracht sind und sich bis auf Höhe des unteren Bodens (3) erstrecken, wobei die Bajonettrohre (4) dazu verwendet werden, die endotherme(n) chemische(n) Reaktion(en) durchzuführen, und in einem Mantel (1) eingeschlossen sind, der eine Eingangsröhre (E) für die heißen Rauchgase aufweist, welche den Bajonettrohren (4) die Wärme zuführen, sowie mindestens eine Ausgangsröhre (S) zum Abführen der kalten Rauchgase nach dem Wärmeaustausch, wobei der Austauschreaktor ein Dampferzeugerbündel aufweist, das aus mehreren vertikalen Rohren (5) besteht, die ebenfalls hängend an der oberen Kuppel (2) des Austauschreaktors angebracht sind und in einer umlaufenden Kammer (8) enthalten sind, welche sich zwischen einer inneren Wandung (Bi), die im Wesentlichen parallel zur vertikalen Wand des Mantel (1) ist, und ebendieser vertikalen Wand (1) befindet, wobei die innere Wandung (Bi) mindestens eine Öffnung (Oi) besitzt, die den Übergang der Rauchgase (10) vom Innenraum des Reaktors in die umlaufende Kammer (8) ermöglicht, wobei die vertikalen Rohre (5), welche der Dampferzeugung dienen, von einem unteren Speicher (9), der sich im unteren Teil der umlaufenden Kammer (8) befindet, mit Wasser gespeist werden, und wobei die Flüssigkeits/Dampf-Mischung, die aus den vertikalen Röhren stammt (5) in einem oberen Sammelgefäß (7), welches sich oberhalb der oberen Kuppel (2) des Austauschreaktors befindet, aufgefangen wird, wobei die untere Leitung (14) die flüssige Phase des Abscheiders (6) mit dem oberen Sammelgefäß (7) verbindet und die obere Leitung (13) das obere Sammelgefäß (7) mit der Dampfphase des Abscheiders (6) verbindet.

2. Austauschreaktor nach Anspruch 1, wobei jedes der Dampferzeugerrohre (5) von einem Wandungsrohr umgeben ist, das im Wesentlichen vertikal und koaxial zum betreffenden Erzeugerrohr ist, sodass die Rauchgase (10) rund um das Dampferzeugerrohr (5) kanalisiert werden können.

3. Austauschreaktor nach Anspruch 1, wobei ein es System von Leitvorrichtungen, die an den Wänden der umlaufenden Kammer (8) befestigt sind, ermöglicht, dass die Strömungsrichtung der Rauchgase (10) im Wesentlichen rechtwinklig zu den vertikalen Rohren (5) ist.

4. Austauschreaktor nach Anspruch 1, wobei das umlaufenden Volumen (8) weniger als 10%, und vorzugsweise weniger als 5% des Gesamtvolumens des Austauschreaktors ausmacht.

5. Austauschreaktor nach Anspruch 1, wobei die Öffnung (Oi), welche den Übergang der Rauchgase vom Innenraum des Reaktors in die umlaufende Kammer (8) ermöglicht, sich im oberen Bereich der inneren Wandung Bi befindet.

6. Verfahren zur Dampfreformierung einer Erdölfraktion oder von Erdgas oder von Alkohol, bei welchem der Austauschreaktor nach Anspruch 1 derart eingesetzt wird, dass die Geschwindigkeit der Rauchgase in der umlaufenden Kammer (8) im Bereich von 20 m/s bis 80 m/s, und vorzugsweise im Bereich von 30 m/s bis 60 m/s, liegt.

7. Verfahren zur Dampfreformierung einer Erdölfraktion oder von Erdgas oder von Alkohol, bei welchem der Austauschreaktor nach Anspruch 1 derart eingesetzt wird, dass die Rauchgase mit einer Temperatur von annähernd 1200°C in den Austauschreaktor gelangen und den Austauschreaktor mit einer Temperatur von weniger als 400°C verlassen.

## Claims

1. An exchanger-reactor for carrying out endothermic reactions, comprising a plurality of bayonet tubes (4) suspended on the upper dome (2) of said reactor and extending to the lower bottom (3), the bayonet tubes (4) being used to carry out the endothermic chemical reaction or reactions and being enclosed in a shell (1) comprising an inlet pipe (E) for the hot flue gas supplying heat to the bayonet tubes (4) and at least one outlet pipe (S) for evacuating cold flue gas following heat exchange, the exchanger-reactor further comprising a steam generation bundle constituted by a plurality of vertical tubes (5) also suspended on the upper dome (2) of the exchanger-reactor and contained in a peripheral space (8) included between an internal baffle (Bi) substantially parallel to the vertical wall of the shell (1) and said vertical wall (1), said internal baffle (Bi) having at least one opening (Oi) for transferring flue gas (10) from the core of the reactor to the peripheral space (8), the vertical tubes (5) for steam generation being supplied with water via a lower feeder head (9) located in the lower portion of the peripheral space (8), and the liquid-steam mixture coming from the vertical tubes (5) being collected in an upper collector (7) located above the upper dome (2) of the reactor exchanger, the lower line (14) connecting the liquid phase of the separator drum (6) to the upper collector (7) and the upper line (13) connecting the upper collector (7) to the vapour phase of the separator drum (6).

2. An exchanger-reactor according to claim 1, in which each steam generation tube (5) is surrounded by a tube with a substantially vertical wall which is coaxial with the generation tube concerned in order to channel the flue gas (10) around the steam generation tube (5).

3. An exchanger-reactor according to claim 1, in which a system of deflectors fixed to the walls of the peripheral space (8) allows the flue gas (10) to move substantially perpendicularly to the vertical tubes (5).

4. An exchanger-reactor according to claim 1, in which the peripheral volume (8) represents less than 10%, preferably less than 5% of the total volume of the exchanger-reactor.

5. An exchanger-reactor according to claim 1, in which the opening (Oi) for the passage of flue gas from the core of the reactor into the peripheral space (8) is located in the upper portion of the internal baffle (Bi).

6. A process for steam reforming an oil cut or natural gas or alcohol using an exchanger-reactor according to claim 1, in which the velocity of the flue gas in the peripheral space (8) is in the range 20 m/s to 80 m/s, preferably in the range 30 m/s to 60 m/s.

7. A process for steam reforming an oil cut or natural gas or alcohol using an exchanger-reactor according to claim 1, in which the flue gas penetrate into the exchanger-reactor at a temperature in the vicinity of 1200°C and leave said exchanger-reactor at a temperature below 400°C.
